# EUROPEAN PATENT SPECIFICATION

(11) **EP 1 941 398 B1**
(45) Date of publication and mention of the grant of the patent: **02.10.2013**
(21) Application number: 06789354.5
(22) Date of filing: 03.08.2006
(51) Int. Cl.: G06F 17/30, H04L 29/08

(54) **METHOD AND APPARATUS FOR REPUBLISHING ELECTRONIC CONTENT FROM A WIRELESS COMMUNICATION DEVICE**
VERFAHREN UND VORRICHTUNG ZUM WIEDERVERÖFFENTLICHEN VON ELEKTRONISCHEM INHALT AUS EINEM DRAHTLOSEN KOMMUNIKATIONSGERÄT
PROCEDE ET APPAREIL PERMETTANT DE REPUBLIER UN CONTENU ELECTRONIQUE A PARTIR D'UN DISPOSITIF DE COMMUNICATION SANS FIL

(30) Priority: 07.10.2005 US 246423
(43) Date of publication of application: 09.07.2008
(73) Proprietor: Sony Ericsson Mobile Communications AB, 221 88 Lund (SE)
(72) Inventor: MULDER, Jonathan, Cary, NC 27519 (US); WAKEFIELD, Ivan, Nelson, Cary, NC 27513 (US)
(74) Representative: HOFFMANN EITLE
(86) International application number: PCT/US2006/030351
(87) International publication number: WO 2007/044116

(56) References cited:
- US-A- 6 094 657
- US-A1- 2003 046 703
- US-A1- 2004 030 795
- US-B1- 6 772 396
- DATABASE EPODOC EUROPEAN PATENT OFFICE, THE HAGUE, NL; XP002414830 & KR 2001 0046018 A (SAMSUNG CORP [KR]) 5 June 2001 (2001-06-05)

## Description

### BACKGROUND

The present invention relates to wireless communication devices, such as cellular handsets, and particularly relates to republishing electronic content, such as that obtained from a web feed, from such devices.

Web feeds represent an increasingly popular means for providing electronic content. As one example, establishing a web feed is accomplished by placing an extensible Markup Language (XML) document on a network-accessible computer, e.g., a web server. More particularly, the XML document includes an item list with embedded electronic content, or with links to such content. Feed subscribers watch or otherwise monitor the file for item list changes, so that new content can be accessed when it becomes available.

Various mechanisms exist for subscribing to web feeds. As one example, a personal computer (PC) may be configured with aggregator software. Aggregators monitor selected web feeds and provide their users with updated content listings, and can be configured to automatically retrieve updated content from selected feeds. Aggregators that target specific types of feeds generally have specialized names. For example, aggregators targeting news feeds (e.g., RSS-based news feeds) are often referred to as news readers, while aggregators targeting "podcast feeds are often referred to as "podcatchers."

Podcast feeds typically comprise item lists that include or link to audio files, e.g., MP3 files, but the term does not exclude other content type, such as video. Podcasting perhaps finds its greatest use by both professionals and amateurs in publishing serial audio content to the web. For example, well known radio (or online) talk and special interest programs oftentimes are made available as downloadable audio or video files through web feeds that are updated as new content is posted. So called "bloggers" also frequently post new content, which may be downloaded by interested users through the corresponding web feeds.

While perhaps not a uniformly defining hallmark, most web feeds offer frequently updated content and thus provide topical information that may be of great interest to subscribers on a daily, hourly, or even minute-by-minute basis. The currency of content accessed through such feeds thus complements the use of mobile wireless communication devices. That is, the desire to access web feed content regardless of time and location makes the ability to subscribe to web feeds and retrieve their associated content via wireless communication devices an attractive and increasingly popular option.

From KR20010046018 A a listener music composure module is known that enables a listener to upload composed music and other users to download and arrange the music over the internet. The composition being uploaded is newly created by a given listener.

From US 2004/030795 Al a portal program is known that inserts targeted web content into a portlet content stream based on a user specified display mode.

The present invention is defined in the appended claims 1 and 8, respectively.

### SUMMARY

A wireless communication device, such as a cellular handset, is configured to retrieve published content through a web feed, offer its user the ability to add commentary or other modifications to the content, and republish the modified content. In at least one embodiment, the republishing of the modified content comprises posting the modified content for access through a web feed, which may be the same or different from the originating feed, so that the modified content is identifiable as a republished version of originally posted content. As one example, the device's user could retrieve audio content, such as from a podcast, listen to the content, insert comments as desired, and republish the modified content, all while operating in a mobile environment.

Of course, the present invention is not limited to the above features and advantages. Indeed, those skilled in the art will recognize additional features and advantages upon reading the following detailed discussion, and upon viewing the accompanying drawings.

### BRIEF DESCRIPTION OF THE DRAWINGS

Fig. 1 is a block diagram of a wireless communication device and a supporting wireless communication network configured for republishing electronic content.
Fig. 2 is a block diagram of a republishing function, which may be implemented as a computer program within the wireless communication device of Fig. 1.
Fig. 3 is a logic flow diagram according to one embodiment of content republishing.
Fig. 4 is a block diagram of a republishing modification function, illustrating one or more types of republication information that can be added to electronic content as part of a republication method.

### DETAILED DESCRIPTION

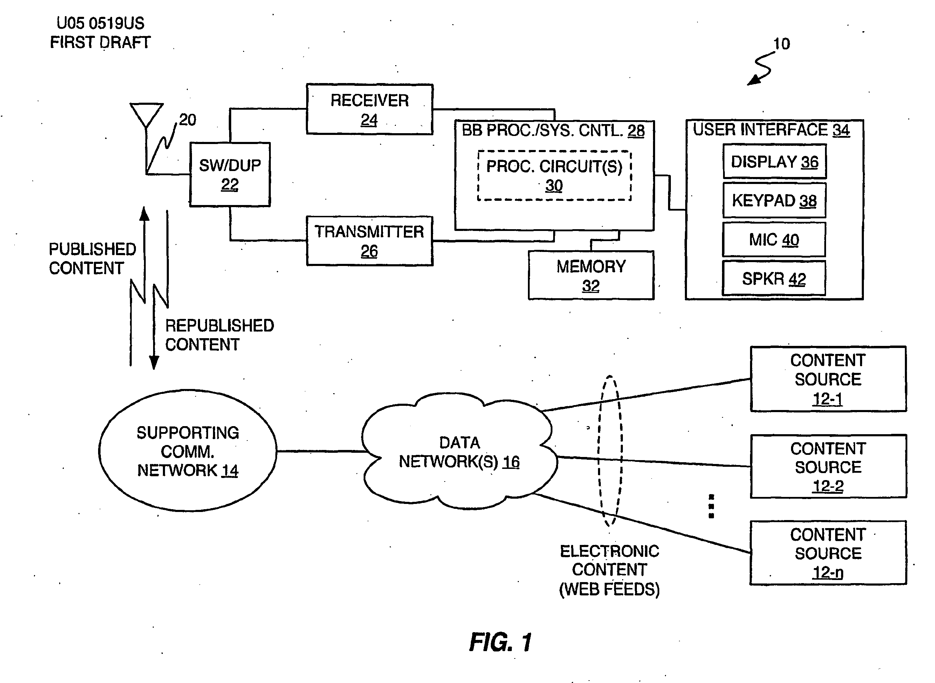

Fig. 1 illustrates a wireless communication device 10 that is communicatively coupled to one or more (electronic) content sources 12 directly or indirectly through a supporting wireless communication network 14. The content source(s) 12 provide published content through podcasts or other types of web feeds, and the device 10 is configured to support retrieval, modification, and republication of such content. The potentially rich user interface and wireless mobility of the device 10 complements these actions, and permits a user of the device 10 to download feed content, view or listen to the content, add or modify the content-such as by adding commentary to a downloaded podcast file-and then republish the modified content.

In the illustration, for example, the supporting wireless communication network 14 links or otherwise communicatively couples with one or more data networks 16, such as the Internet, that provide the device 10 with access to the content source(s) 12. In the depicted embodiment, the device 10 comprises a receive/transmit antenna 20, a switch/duplexer 22, a receiver circuit 24, a transmitter circuit 26, baseband processing/system control circuits 28, which include one or more processing circuits 30 configured to support published content retrieval, modification, and republication, memory circuit(s) 32, and a user interface 34. In at least one embodiment, the user interface 34 includes a display 36, a keypad 38, a microphone 40, and a speaker 42 (or other audio output device or system).

By way of non-limiting example, the device 10 comprises a cellular handset, such as a GSM/GPRS or Wideband CDMA (WCDMA) handset and, in turn, the supporting communication network 14 comprises a cellular network, including radio access and core network entities as needed to support wireless communication with the device 10, and backend communication with the data network(s) 16.

Of course, it should be understood that the device 10 can be configured as a wireless pager, PDA, palmtop/laptop computer, or other type of portable communication device. The intended use and the desired features will dictate the particular implementation of the device 10, and it should be understood that the particulars of supporting communication network 14 will change according to the particular implementation of the device 10. For example, the supporting communication network 14 may comprise a short-range radio network, such as WiFi or Bluetooth, or may comprise a wider area radio network, such as WiMax, and that the communication circuits (receiver 24 and transmitter 26) of the device 10 will be configured as needed to support the particular air interface(s) desired in a given implementation.

Regardless, the one or more processing circuits 30 of the device 10 are configured to retrieve published content through the supporting communication network 14, modify the published content by adding content, and republish the modified content through the supporting communication network 14. As such, the processing circuit(s) 30 may comprise one or more microprocessors, digital signal processors, application specific integrated circuits, field programmable gate arrays, and/or other types of digital processing circuits, configured according to computer program instructions implemented in software (or firmware). Such circuits may be shared with other signal and control functions of the baseband processor/system control circuits 28.

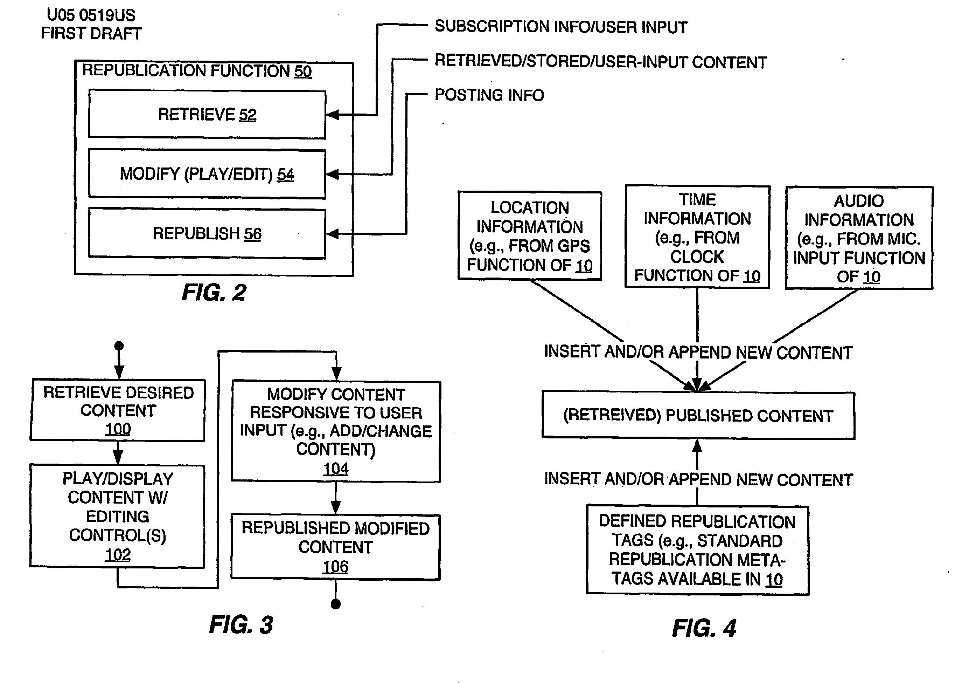

Fig. 2 illustrates a content republishing function 50 that may be implemented by executing computer program instructions, such as might be stored in the memory circuit(s) 32, via the one or more processing circuits 30. Fig. 3 illustrates corresponding program logic that may be implemented by the functional elements of the republishing function 50.

Referring to Fig. 3, one sees that processing "begins" with the retrieval of (desired) published content from the one or more content sources 12 (Step 100). Thus, the content retrieval function 52 shown in Fig. 2 may be configured to retrieve published content from the content source(s) 12 based on, for example, configured subscription information or user input.

For example, the republishing function 50 may display available web feed information on the display 36, and receive selection input from a user of the device 10 via the keypad 38, indicating which feeds should be monitored for the availability of newly published content. The retrieval function 52 thus may maintain feed subscriptions to podcasts and the like, and retrieve (download) newly published content to the device 10 when it becomes available, or when the device's user provides input indicating that such retrieval is desired.

The processing flow of Fig. 3 continues with the modification of retrieved published content (Step 102), which may be accomplished by playing/displaying the retrieved content for editing by the device's user. Thus, the modification function 54 shown in Fig. 2 may be configured as a playback/edit function that permits the device's user to see (or hear) and edit published content retrieved to the device 10. Processing continues with the modification of the retrieved published content (Step 104) via the modification function 54. That is, the modification function 54 allows the user to add content of the same or different type to the retrieved content.

For example, the modification function 54 may be configured to playback downloaded audio files, using onscreen playback and edit controls, thereby allowing the user to listen to a given file, and insert or append new audio commentary to the file as desired. Thus, the user could pause playback at a given time point in the file and insert personal commentary (e.g., points of agreement, disagreement, etc.) by speaking into the microphone 40 of the user interface 34.

Processing in Fig. 3 continues with republication of the modified content (Step 106). To that end, a republish function 56 as shown in Fig. 2 provides for automatic and/or user-directed republication of the modified content. In one example, the modified content is republished to the same feed from which corresponding published content was retrieved, or at least linked to the same feed, so that the original and modified content are both available to subscribers of the feed. In other embodiments, the republished content may be posted to the same feed, to a different feed, or to multiple feeds.

With the above details in mind, it will be generally understood that the one or more processing circuits 30 may be configured, i.e., through implementation of the republishing function 50 as software or firmware, to retrieve published content through the supporting communication network 14, modify the published content by adding content, and republish the modified content through the supporting communication network 14 to make the republished modified content available for retrieval by others, for example. Such operations may comprise downloading audio content from a web feed accessible through the supporting communication network 14 and modifying the retrieved audio content by adding new audio content.

The (audio) web feeds may comprise podcasts, such that the downloaded audio content comprises an audio file associated with a given podcast, and such that modification of the downloaded audio content comprises providing editing functions via the user interface 34 to allow inserting or appending new audio content received via the user interface 34. However, regardless of the downloaded or added content type, it should be understood that the one or more processing circuits 30 may be configured to republish the modified content by updating a web feed to list the modified electronic content as a republished version of the published electronic content.

To that end, the one or more processing circuits 30 may be configured to modify the published content by adding particular types of content that may be advantageously available in the device 10. For example, Fig. 4 indicates that, in addition to, or as an alternative to, any new content generated or selected by the user for addition to the retrieved content, the one or more processing circuits 30 may be configured to add republication information as part of the modification and republication of retrieved content.

For example, the one or more processing circuits 30 may be configured to add republication information by at least one of inserting or appending time information to indicate a modification time, inserting or appending wireless communication device location information to indicate a modification location, and inserting or appending defined republication tags to aid in later identification and retrieval of the republished content.

The location information may be readily available within the device 10, which may acquire or otherwise receive location information in support of other functions independent from the republication function 50. As a non-limiting example, the baseband/system control circuits 28 may include or be associated with a GPS location circuit, which may have corresponding signal reception circuits included in or associated with the receiver circuit 24. GPS reception may share the receive/transmit antenna 20 depicted in Fig. 1, or may use another antenna (not pictured). Of course, the particular mechanism used for determining the location of the device 10 is not limiting with respect to its use as republication information to "location-stamp" republished content. Location stamping provides relevant information, for example, as evidence that republished content is relevant to a particular location.

As another example of republication information already available within the device 10, the device's clock time (time-of-day) may be used to time stamp the modifications made to the retrieved content. Such information provides time-of-day modification information, which may be useful to other users interested in identifying and retrieving republished content.

As another example, the one or more processing circuits 30 may be configured to add republication tags to the modified content to aid in later identification and retrieval of the republished content. Such tags may be meta-tags, such as used in web feeds using XML-based listing or content files available on or through the content servers 12. The meta-tags may be part of, or may define, a republication grammar that identifies the nature of a given republication-critique, commentary, expansion, etc.-and may provide identifiers regarding the type of content added-e.g., text, photo, video, multimedia. The memory circuit(s) 32 may store republication tags and/or the device 10 may retrieve custom or standardized republication tags from the content servers 12, for example.

As a further convenience feature, the one or more processing circuits 30 may be configured to generate a user interface indication of new content availability in one or more electronic feeds accessible by the device 10 through the supporting communication network 14. Thus, the user interface 34 may be used to display an indicator-e.g., an icon-on the display screen 36 and/or to output an audible signal via the speaker 42. The new content indication function may be configured to identify when new (original) content is published on one or more selected web feeds and/or to identify when republished content is posted to, or otherwise made available, thereby allowing, for example, pluralities of users to stay informed of the others' republication activities.

In support, the content servers 12 may provide the supporting communication network 14 with indications of new content availability, and the supporting communication network 14 can be configured to generate and transmit over-the-air signaling to targeted users-e.g., users subscribed to an updated web feed. Such functionality can be incorporated into existing packet data entities, such as Multimedia Gateways (MGWs) or Packet Data Serving Nodes (PDSNs), or a new entity may be added to a packet core network included in the supporting communication network 14, or to an associated Internet Multimedia Subsystem (IMS).

Regardless of such additional features and capabilities, those skilled in the art should appreciate that the present invention broadly provides a wireless communication device that is configured for retrieval, playback or display, editing, and republication of electronic content available through one or more electronic feeds, all while operating in the mobile environment. Thus, the present invention is not limited to the features and advantages detailed in the foregoing description, nor is it limited by the accompanying drawings. Indeed, the present invention is limited only by the following claims, and their legal equivalents.

## Claims

1. A method in a wireless communication device (10) of republishing previously published content of an electronic format, the method including retrieving published content through a supporting communication network (14) by downloading audio content from a web feed accessible through the supporting communication network, (14) and
modifying the published content by adding audio content to the downloaded audio content; and **characterized by** :
republishing the modified content through the supporting communication network (14) by updating a web feed to list the modified content as a republished version of the published content.

2. The method of claim 1, wherein the web feed comprises a podcast, and wherein downloading the audio content comprises downloading an audio file associated with the podcast, and wherein modifying the published content by adding audio content is further **characterized by** providing editing functions via a user interface (34) of the wireless communication device (10), and inserting or appending new audio content received from a user of the wireless communication device (10) via the user interface (34).

3. The method of claim 1, further **characterized by** adding republication information to the downloaded audio content.

4. The method of claim 3, further **characterized in that** adding republication information comprises adding defined republication tags to aid in later identification and retrieval of the republished content.

5. The method of claim 3, further **characterized in that** adding republication information comprises at least one of inserting or appending time information to indicate a modification time, inserting or appending wireless communication device location information to indicate a modification location, and inserting or appending defined republication tags to aid in later identification and retrieval of the republished content.

6. The method of claim 5, further **characterized in that** inserting or appending wireless communication device location information to indicate the modification location comprises inserting or appending location information to the published content that identifies where the wireless communication device (10) was located during modification of the published content.

7. The method of claim 1, further **characterized by** generating an indication via a user interface (34) of the wireless communication device (10) of content availability in one or more electronic feeds accessible by the wireless communication device (10) through the supporting communication network (14).

8. A wireless communication device (10) configured to retrieve published content through a supporting communication network (14) by downloading audio content from a web feed accessible through the supporting communication network (14), and one or more processing circuits (30) configured to:
modify the published content by adding new audio content to the downloaded audio content; and **characterized by**
republishing the modified content by posting the modified content to a web feed of an electronic content source (12) that is communicatively coupled to the wireless communication device (10) through the supporting communication network (14), said posting identifying the modified content as a republished version of originally posted content.

9. The wireless communication device (10) of claim 8, wherein the web feed comprises a podcast, and the one or more processing circuits (30) are configured to download an audio file associated with the podcast, and further **characterized in that** the one or more processing circuits (30) are configured to modify the published content by providing editing functions via a user interface of the wireless communication device (10) and inserting or appending new audio content received via the user interface.

10. The wireless communication device (10) of claim 8, further **characterized in that** the one or more processing circuits (30) are further configured to add republication information to the downloaded audio content.

11. The wireless communication device (10) of claim 10, further **characterized in that** the one or more processing circuits (30) are configured to add republication information by adding defined republication tags to aid in later identification and retrieval of the modified content.

12. The wireless communication device (10) of claim 10, further **characterized in that** the one or more processing circuits (30) are configured to add republication information by at least one of inserting or appending time information to indicate a modification time, inserting or appending wireless communication device location information to indicate a modification location, and inserting or appending defined republication tags to aid in later identification and retrieval of the modified content.

13. The wireless communication device (10) of claim 12, further **characterized in that** the one or more processing circuits (30) are configured to insert or append location information to the published content that identifies where the wireless communication device (10) was located during modification of the published content.

14. The wireless communication device (10) of claim 8, further **characterized in that** the one or more processing circuits (30) are configured to generate a user interface indication of new content availability in one or more electronic feeds accessible by the wireless communication device (10) through the supporting communication network (14).

## Patentansprüche

1. Verfahren in einer drahtlosen Kommunikationsvorrichtung (10) zum Wiederveröffentlichen von früher veröffentlichtem Inhalt eines elektronischen Formats, wobei das Verfahren ein Abrufen von veröffentlichtem Inhalt durch ein unterstützendes Kommunikationsnetz (14) durch Herunterladen von Audioinhalt von einem Webfeed, auf den durch das unterstützende Kommunikationsnetz (14) zugegriffen werden kann, und
Modifizieren des veröffentlichten Inhalts durch Hinzufügen von Audioinhalt zum heruntergeladenen Audioinhalt umfasst; und **gekennzeichnet durch**:
Wiederveröffentlichen des modifizierten Inhalts **durch** das unterstützende Kommunikationsnetz (14) **durch** Aktualisieren eines Webfeeds, um den modifizierten Inhalt als eine wiederveröffentlichte Version des veröffentlichten Inhalts aufzulisten.

2. Verfahren nach Anspruch 1, wobei der Webfeed einen Podcast umfasst, und wobei das Herunterladen des Audioinhalts ein Herunterladen einer mit dem Podcast assoziierten Audiodatei umfasst, und wobei das Modifizieren des veröffentlichten Inhalts durch Hinzufügen von Audioinhalt ferner durch Bereitstellen von Bearbeitungsfunktionen über eine Benutzerschnittstelle (34) der drahtlosen Kommunikationsvorrichtung (10) und Einfügen oder Anhängen von neuem Audioinhalt, der von einem Benutzer der drahtlosen Kommunikationsvorrichtung (10) über die Benutzerschnittstelle (34) empfangen wird, gekennzeichnet ist.

3. Verfahren nach Anspruch 1, ferner **gekennzeichnet durch** Hinzufügen von Wiederveröffentlichungsinformationen zum heruntergeladenen Audioinhalt.

4. Verfahren nach Anspruch 3, ferner **dadurch gekennzeichnet, dass** das Hinzufügen von Wiederveröffentlichungsinformationen ein Hinzufügen von definierten Wiederveröffentlichungs-Tags umfasst, um bei der späteren Identifikation und dem späteren Abruf des wiederveröffentlichten Inhalts zu helfen.

5. Verfahren nach Anspruch 3, ferner **dadurch gekennzeichnet, dass** das Hinzufügen von Widerveröffentlichungsinformationen mindestens eines von einem Einfügen oder Anhängen von Zeitinformationen, um eine Modifikationszeit anzugeben, Einfügen oder Anhängen von Ortsinformationen der drahtlosen Kommunikationsvorrichtung, um den Modifikationsort anzugeben, und Einfügen oder Anhängen von definierten Wiederveröffentlichungs-Tags, um bei der späteren Identifikation oder dem späteren Abruf des veröffentlichten Inhalts zu helfen, umfasst.

6. Verfahren nach Anspruch 5, ferner **dadurch gekennzeichnet, dass** das Einfügen oder Anhängen von Ortsinformationen der drahtlosen Kommunikationsvorrichtung, um den Modifikationsort anzugeben, ein Einfügen oder Anhängen von Ortsinformationen zum veröffentlichten Inhalt umfasst, welche identifizieren, wo sich die drahtlose Kommunikationsvorrichtung (10) während der Modifikation des veröffentlichten Inhalts befand.

7. Verfahren nach Anspruch 1, ferner **gekennzeichnet durch** Erzeugen einer Angabe über eine Benutzerschnittstelle (34) der drahtlosen Kommunikationsvorrichtung (10) von Inhaltsverfügbarkeit in einem oder mehreren elektronischen Feeds, auf welche die drahtlose Kommunikationsvorrichtung (10) **durch** das unterstützende Kommunikationsnetz (14) zugreifen kann.

8. Drahtlose Kommunikationsvorrichtung (10), die so konfiguriert ist, dass sie veröffentlichten Inhalt durch ein unterstützendes Kommunikationsnetz (14) durch Herunterladen von Audioinhalt von einem Webfeed abruft, auf den durch das unterstützende Kommunikationsnetz (14) zugegriffen werden kann, und eine oder mehr Verarbeitungsschaltungen (30), die konfiguriert sind zum:
Modifizieren des veröffentlichten Inhalts durch Hinzufügen von neuem Audioinhalt zum heruntergeladenen Audioinhalt; und **gekennzeichnet durch**:
Wiederveröffentlichen des modifizierten Inhalts **durch** Posten des modifizierten Inhalts in einem Webfeed einer elektronischen Inhaltsquelle (12), die **durch** das unterstützende Kommunikationsnetz (14) kommunikativ mit der drahtlosen Kommunikationsvorrichtung (10) gekoppelt ist, wobei das Posten den modifizierten Inhalt als eine wiederveröffentlichte Version von ursprünglich gepostetem Inhalt identifiziert.

9. Drahtlose Kommunikationsvorrichtung (10) nach Anspruch 8, wobei der Webfeed einen Podcast umfasst, und die eine oder die mehreren Verarbeitungsschaltungen (30) so konfiguriert sind, dass sie eine mit dem Podcast assoziierte Audiodatei herunterladen, und ferner **dadurch gekennzeichnet, dass** die eine oder die mehreren Verarbeitungsschaltungen (30) so konfiguriert sind, dass sie den veröffentlichten Inhalt durch Bereitstellen von Bearbeitungsfunktionen über eine Benutzerschnittstelle der drahtlosen Kommunikationsvorrichtung (10) und Einfügen oder Anhängen von neuem Audioinhalt, der über die Benutzerschnittstelle empfangen wird, modifizieren.

10. Drahtlose Kommunikationsvorrichtung (10) nach Anspruch 8, ferner **dadurch gekennzeichnet, dass** die eine oder die mehreren Verarbeitungsschaltungen (30) ferner so konfiguriert sind, dass sie Wiederveröffentlichungsinformationen zum heruntergeladenen Audioinhalt hinzufügen.

11. Drahtlose Kommunikationsvorrichtung (10) nach Anspruch 10, ferner **dadurch gekennzeichnet, dass** die eine oder die mehreren Verarbeitungsschaltungen (30) ferner so konfiguriert sind, dass sie Wiederveröffentlichungsinformationen durch Hinzufügen von definierten Wiederveröffentlichungs-Tags hinzufügen, um bei der späteren Identifikation und dem späteren Abruf des modifizierten Inhalts zu helfen.

12. Drahtlose Kommunikationsvorrichtung (10) nach Anspruch 10, ferner **dadurch gekennzeichnet, dass** die eine oder die mehreren Verarbeitungsschaltungen (30) so konfiguriert sind, dass sie Wiederveröffentlichungsinformationen durch mindestens eines von einem Einfügen oder Anhängen von Zeitinformationen, um eine Modifikationszeit anzugeben, Einfügen oder Anhängen von Ortsinformationen der drahtlosen Kommunikationsvorrichtung, um einen Modifikationsort anzugeben, und Einfügen oder Anhängen von definierten Wiederveröffentlichungs-Tags, um bei der späteren Identifikation oder dem späteren Abruf des veröffentlichten Inhalts zu helfen, hinzufügen.

13. Drahtlose Kommunikationsvorrichtung (10) nach Anspruch 12, ferner **dadurch gekennzeichnet, dass** die eine oder die mehreren Verarbeitungsschaltungen (30) so konfiguriert sind, dass sie Ortsinformationen zum veröffentlichten Inhalt hinzufügen oder anhängen, die identifizieren, wo sich die drahtlose Kommunikationsvorrichtung 810) während der Modifikation des veröffentlichten Inhalts befand.

14. Drahtlose Kommunikationsvorrichtung (10) nach Anspruch 8, ferner **dadurch gekennzeichnet, dass** die eine oder die mehreren Verarbeitungsschaltungen (30) ferner so konfiguriert sind, dass sie eine Benutzerschnittstellenangabe von Verfügbarkeit von neuem Inhalt in einem oder mehreren elektronischen Feeds erzeugen, auf die durch die drahtlose Kommunikationsvorrichtung (10) durch das unterstützende Kommunikationsnetz (14) zugegriffen werden kann.

## Revendications

1. Procédé, exécuté sur un dispositif de communication sans fil (10), de republication d'un contenu précédemment publié offrant un format électronique, le procédé comprenant les étapes consistant à :
obtenir le contenu publié grâce à un réseau de communication de soutien (14) en téléchargeant un contenu audio d'un point de syndication web accessible via le réseau de communication de soutien (14) ; et
modifier le contenu publié en ajoutant du contenu audio au contenu audio téléchargé ;
**caractérisé par** l'étape consistant à :
republier le contenu modifié via le réseau de communication de soutien (14) en mettant à jour un point de syndication web afin qu'il énumère le contenu modifié comme une version republiée du contenu publié.

2. Procédé selon la revendication 1, dans lequel le point de syndication web comprend un point de baladodiffusion, dans lequel le téléchargement du contenu audio comprend le téléchargement d'un fichier audio associé au point de baladodiffusion et dans lequel l'étape de modification du contenu publié en ajoutant un contenu audio est **caractérisée en outre par** l'étape consistant à fournir des fonctions d'édition via une interface utilisateur (34) du dispositif de communication sans fil (10) et à insérer ou concaténer un nouveau contenu audio reçu d'un utilisateur du dispositif de communication sans fil (10) via l'interface utilisateur (34).

3. Procédé selon la revendication 1, **caractérisé en outre par** l'étape consistant à ajouter des informations de republication au contenu audio téléchargé.

4. Procédé selon la revendication 3, **caractérisé en outre en ce que** l'étape d'addition d'informations de republication comprend l'étape consistant à ajouter des balises prédéfinies de republication pour faciliter l'identification et l'obtention ultérieures du contenu republié.

5. Procédé selon la revendication 3, **caractérisé en outre en ce que** l'étape d'addition d'informations de republication comprend au moins une des étapes consistant à insérer ou concaténer des informations temporelles pour indiquer un instant de la modification, insérer ou concaténer des informations de position du dispositif de communication sans fil pour indiquer une position de modification et insérer ou concaténer des balises prédéterminées de republication pour faciliter l'identification et l'obtention ultérieures du contenu republié.

6. Procédé selon la revendication 5, **caractérisé en outre en ce que** l'étape d'insertion ou de concaténation d'informations de position du dispositif de communication sans fil pour indiquer la position de modification comprend l'étape consistant à insérer ou concaténer dans le contenu publié des informations de position qui identifient l'endroit où le dispositif de communication sans fil (10) était situé pendant la modification du contenu publié.

7. Procédé selon la revendication 1, **caractérisé en outre par** l'étape consistant à produire sur une interface utilisateur (34) du dispositif de communication sans fil (10) une indication de disponibilité de contenus sur un ou plusieurs points de syndication électronique accessibles au dispositif de communication sans fil (10) via le réseau de communication de soutien (14).

8. Dispositif de communication sans fil (10) configuré pour obtenir du contenu publié grâce à un réseau de communication de soutien (14) en téléchargeant un contenu audio d'un point de syndication web accessible via le réseau de communication de soutien (14) et possédant un ou plusieurs circuits de traitement (30) configurés pour :
modifier le contenu publié en ajoutant du contenu audio au contenu audio téléchargé ; et
**caractérisé par** l'étape consistant à :
republier le contenu modifié via le réseau de communication de soutien (14) en téléchargeant le contenu modifié vers un point de syndication web d'une source de contenu électronique (12) qui est couplée avec le dispositif de communication sans fil (10) afin de communiquer via le réseau de communication de soutien (14), ledit téléchargement identifiant le contenu modifié comme une version republiée du contenu publié à l'origine.

9. Dispositif de communication sans fil (10) selon la revendication 8, dans lequel le point de syndication web comprend un point de baladodiffusion et lesdits un ou plusieurs circuits de traitement (30) sont configurés pour télécharger un fichier audio associé au point de baladodiffusion et **caractérisé en outre en ce que** lesdits un ou plusieurs circuits de traitement (30) sont configurés pour modifier le contenu publié en fournissant des fonctions d'édition via une interface utilisateur du dispositif de communication sans fil (10) et en insérant ou en concaténant un nouveau contenu audio reçu via l'interface utilisateur.

10. Dispositif de communication sans fil (10) selon la revendication 8, **caractérisé en outre en ce que** lesdits un ou plusieurs circuits de traitement (30) sont en outre configurés pour ajouter des informations de republication au contenu audio téléchargé.

11. Dispositif de communication sans fil (10) selon la revendication 10, **caractérisé en outre en ce que** lesdits un ou plusieurs circuits de traitement (30) sont configurés pour ajouter des informations de republication en ajoutant des balises prédéfinies de republication pour faciliter l'identification et l'obtention ultérieures du contenu modifié.

12. Dispositif de communication sans fil (10) selon la revendication 10, **caractérisé en outre en ce que** lesdits un ou plusieurs circuits de traitement (30) sont configurés pour ajouter des informations de republication en effectuant au moins une opération parmi les suivantes : insérer ou concaténer des informations temporelles pour indiquer un instant de la modification, insérer ou concaténer des informations de position du dispositif de communication sans fil pour indiquer une position de modification et insérer ou concaténer des balises prédéterminées de republication pour faciliter l'identification et l'obtention ultérieures du contenu modifié.

13. Dispositif de communication sans fil (10) selon la revendication 12, **caractérisé en outre en ce que** lesdits un ou plusieurs circuits de traitement (30) sont configurés pour insérer ou concaténer dans le contenu publié des informations de position qui identifient l'endroit où le dispositif de communication sans fil (10) était situé pendant la modification du contenu publié.

14. Dispositif de communication sans fil (10) selon la revendication 8, **caractérisé en outre en ce que** lesdits un ou plusieurs circuits de traitement (30) sont configurés pour produire dans l'interface utilisateur une indication de la disponibilité de nouveaux contenus sur un ou plusieurs points de syndication électronique accessibles au dispositif de communication sans fil (10) via le réseau de communication de soutien (14).
